# EUROPÄISCHE PATENTSCHRIFT

(11) **EP 1 004 786 B1**
(45) Veröffentlichungstag und Bekanntmachung des Hinweises auf die Patenterteilung: **22.12.2004**
(21) Anmeldenummer: 99119645.2
(22) Anmeldetag: 04.10.1999
(51) Int. Cl.: F16D 25/12, F15B 11/028

(54) **Anlaufsteuerung zum Ansteuern einer hydraulischen Kolben-Zylinder-Einheit**
Start-up control for controlling an hydraulic piston-cylinder unit
Commande de démarrage pour la commande d'une unité de piston-cylindre

(30) Priorität: 25.11.1998 DE 19854453
(43) Veröffentlichungstag der Anmeldung: 31.05.2000
(73) Patentinhaber: Liebherr, Markus, 88436 Eberhardzell (DE)
(72) Erfinder: Bauer, Josef, 85405 Nandlstadt (DE)
(74) Vertreter: Zinnecker, Armin, Dipl.-Ing.

(56) Entgegenhaltungen:
- EP-A- 0 412 505
- US-A- 3 991 865
- US-A- 4 046 162

## Beschreibung

Die Erfindung betrifft eine Anlaufsteuerung zum Ansteuern einer hydraulischen Kolben-Zylinder-Einheit, insbesondere zum Ansteuern einer Lamellenkupplung. Die vorliegende Erfindung betrifft ferner eine Lamellenkupplung mit einem durch einen Kolben zusammenpreßbaren Lamellenpaket, mit einer Zuführung für ein Hydraulikmedium, die derart angeordnet ist, daß auf den Kolben bei Druckbeaufschlagung der Zuführung eine auf das Lamellenpaket gerichtete Kraft erzeugbar ist, sowie mit einem oder mehreren Rückstellelementen, die auf den Kolben eine entgegen der durch das Hydraulikmedium aufbringbaren Kraft wirkende Gegenkraft aufbringen. Die vorliegende Erfindung betrifft ferner ein Fahrzeug, insbesondere ein Nutzfahrzeug, mit einer mit einem Hydraulikmedium beaufschlagbaren Kolben-Zylinder-Einheit.

Eine Lamellenkupplung weist mehrere auf einer Abtriebswelle angeordnete Kupplungsscheiben auf, die beim Betätigen der Kupplung reibschlüssig mit zwischen den Lamellen vorgesehenen und mit einer Antriebswelle in Verbindung stehenden Rädern oder Lamellen verbunden werden und auf diese Weise die Übertragung eines Drehmomentes ermöglichen. Bei Betätigung der Kupplung wird ein bewegbar angeordneter Kolben mit Drucköl beaufschlagt und dabei in Richtung des Lamellenpaketes bewegt. Nach Überwindung des zwischen Kolben und Lamellenpaket befindlichen Lüftweges liegt der Kolben an dem Lamellenpaket an und preßt in Abhängigkeit des wirkenden Öldruckes das Lamellenpaket zusammen, wodurch Abtriebs- und Antriebswelle reibschlüssig miteinander verbunden werden. Bei Entlasten des Kolbens vom Öldruck wird dieser durch die Rückstellfedem der Kupplung zurückgedrückt und die Kupplung auf diese Weise ausgeschaltet.

Dokument US4046162 offenbart eine Anlaufsteuerung zum Ansteuern einer hydraulischen Kolben-Zylinder Einheit wobei ein Steuerventil vom Lastdruck in Schließrichtung und von einem vom Lastdruck über eine Drosselstelle abgeleiteten Druck in Öffnungsrichtung beaufschlagt wird.

Um das sichere Trennen der Kupplung zu gewährleisten, ist ein bestimmter Lüftweg einzuhalten, dessen Größe nicht nur von Fertigungstoleranzen der Lamellen, sondern auch vom Verschleiß der Kupplung abhängig ist. Mit zunehmendem Verschleiß der Lamellen wird auch der Lüftweg größer. Bei vorbekannten Lamellenkupplungen ist es nachteilig, daß der zeitliche Verlauf des Anpreßdruckes des Kolbens am Lamellenpaket von der Größe des zurückzulegenden Lüftweges abhängt. Daraus ergibt sich, daß Fertigungstoleranzen oder ein im Betrieb zunehmender Verschleiß der Kupplung die Schaltcharakteristik der Kupplung beeinflussen. Dies kann beispielsweise dazu führen, daß der Anpreßdruck bei erhöhtem Verschleiß in verhältnismäßig kurzer Zeit ansteigt, was ein entsprechend abruptes Einschalten der Kupplung zur Folge hat.

Es ist die Aufgabe der vorliegenden Erfindung eine Vorrichtung bereitzustellen, mittels derer stets ein weiches Einschalten der Kupplung bewirkt werden kann.

Diese Aufgabe wird durch eine gattungsgemäße Anlaufsteuerung gelöst, die ein Steuerventil, das in eine Offenstellung und eine Schließstellung bewegbar ist, sowie eine mit der hydraulischen Kolben-Zylinder-Einheit verbindbare erste Anschlußleitung sowie eine mit einer Druckspeisung verbindbare zweite Anschlußleitung umfaßt. Die erste und die zweite Anschlußleitung stehen mit dem Steuerventil in Verbindung. Die erste Anschlußleitung ist derart ausgeführt, daß bei deren Druckbeaufschlagung auf das Steuerventil eine in Schließstellung wirkende Kraft erzeugbar ist. Ferner ist eine erste Steuerleitung vorgesehen, die mit dem Steuerventil derart in Verbindung steht, daß bei deren Druckbeaufschlagung auf das Steuerventil eine in Offenstellung wirkende Kraft erzeugbar ist. Die erfindungsgemäße Anlaufsteuerung weist ferner ein Drosselelement auf, dessen Zulauf mit der Druckspeisung verbindbar ist und dessen Ablauf mit einem Druckspeicher sowie mit der ersten Steuerleitung in Verbindung steht. Das Steuerventil ist erfindungsgemäß derart ausgeführt, daß es von der Offenstellung in die Schließstellung bewegt wird, wenn die in der ersten Anschlußleitung wirkende Druckkraft die in der ersten Steuerleitung wirkende Druckkraft um einen vorgegebenen Betrag übersteigt.

Durch die erfindungsgemäße Anlaufsteuerung wird erreicht, daß Öl oder ein beliebiges anderes geeignetes Hydraulikmedium zunächst in den Kolbenraum einer Lamellenkupplung einströmt, bis das Steuerventil schließt. Das Steuerventil wird erfindungsgemäß geschlossen, wenn die bei der Druckbeaufschlagung der ersten Anschlußleitung in Schließstellung wirkende Kraft die bei der Druckbeaufschlagung der ersten Steuerleitung in Offenstellung wirkende Kraft um einen vorgegebenen Betrag übersteigt. Dieser vorgegebene Betrag ist vorteilhaft derart abzustimmen, daß der im Kolbenraum der Kolben-Zylinder-Einheit bzw. der Lamellenkupplung vorliegende Druck ausreicht, um den Kolben der Lamellenkupplung gegen die Kraft der Rückstellfedem an das Lamellenpaket heranzuführen.

Steigt der in der ersten Anschlußleitung vorliegende Druck an, wird bei Überschreiten der vorgebbaren Differenz das Steuerventil geschlossen.

Das einströmende Hydraulikmedium wird nun über das Drosselelement in den Druckspeicher geführt, wobei der im Ablauf des Drosselelementes vorliegende Druck auch in der ersten Steuerleitung des Steuerventils anliegt. Eine Erhöhung des Druckes in der ersten Steuerleitung führt dazu, daß sich das Steuerventil wieder öffnet, wodurch sich schließlich im Kolbenraum der Kolben-Zylinder-Einheit bzw. der Lamellenkupplung mit derselben Geschwindigkeit wie im Druckspeicher der erfindungsgemäßen Anlaufsteuerung ein Druck aufbaut. Hierdurch wird erreicht, daß unabhängig von der Länge des zurückzulegenden Lüftweges stets der gewünschte zeitliche Verlauf des Anpreßdruckes des Kolbens am Lamellenpaket vorliegt. Der Anpreßdruck wird in einer vorgegebenen Zeit von 0 auf den Maximalwert erhöht.

Gemäß einer bevorzugten Ausgestaltung der vorliegenden Erfindung ist eine zweite Steuerleitung vorgesehen, die mit der ersten Anschlußleitung sowie mit dem Steuerventil in Verbindung steht, und die derart ausgeführt ist, daß bei Druckbeaufschlagung der zweiten Steuerleitung auf das Steuerventil eine in Schließstellung wirkende Kraft erzeugbar ist. Somit wird es möglich, die in Schließstellung wirkende Kraft nicht oder nicht ausschließlich durch die erste Anschlußleitung, sondern durch die zweite Steuerleitung auf das Steuerventil auszuüben. Die zweite Steuerleitung kann als Abzweigung von der ersten Anschlußleitung ausgeführt sein.

Es kann eine Feder vorgesehen sein, durch die das Steuerventil in Offenstellung vorbelastet wird. Das Steuerventil wird somit in der Offenstellung gehalten, bis die Differenz der auf das Steuerventil wirkenden Druckkräfte die Federkraft übersteigt. Die Feder sowie das in der ersten Steuerleitung befindliche und unter Druck stehende Hydraulikmedium wirken in der gleichen Richtung, während die Gegenkraft durch das in der ersten Anschlußleitung bzw. in der zweiten Steuerleitung vorliegende, ebenfalls unter Druck stehende Hydraulikmedium aufgebracht wird.

Gemäß einer bevorzugten Ausgestaltung der vorliegenden Erfindung ist eine elektrische Meß- und Steuereinheit vorgesehen, durch die die Drücke in der ersten Steuerleitung sowie in der ersten Anschlußleitung und/oder in der zweiten Steuerleitung erfaßbar und auswertbar sind und durch die in Abhängigkeit der Auswertung eine in Offen- oder Schließstellung des Steuerventils wirkende Kraft ausübbar ist. Die Betätigung des Steuerventils ist somit auch mit Hilfe von Meßwertaufnehmem und einer entsprechenden Auswertung der Meßergebnisse möglich, wodurch eine der mechanischen Ausführung identische Arbeitsweise des Steuerventils realisierbar ist.

Besonders vorteilhaft ist es, wenn ein Magnetventil vorgesehen ist, durch das die Anlaufsteuerung von der Druckspeisung absperrbar ist. Das Magnetventil wird geöffnet, wenn die Kupplung betätigt werden soll, wodurch entsprechend eine Verbindung zwischen Druckspeisung und der erfindungsgemäßen Anlaufsteuerung hergestellt wird.

In weiterer Ausgestaltung der vorliegenden Erfindung ist vorgesehen, daß das Drosselelement und/oder das Steuerventil eine Bypassleitung aufweisen, in der ein Rückschlagventil vorgesehen ist, mittels dessen das Hydraulikmedium aus dem Druckspeicher und/oder aus der Kolben-Zylinder-Einheit abführbar ist. Beim Ausschalten der Kupplung strömt das Hydraulikmedium vom Druckspeicher über das entsprechende Rückschlagventil in der Bypassleitung des Drosselelementes sowie das Hydraulikmedium aus dem Kolbenraum der Kolben-Zylinder-Einheit bzw. der Lamellenkupplung über das Rückschlagventil in der Bypassleitung des Steuerventils zurück zum Vorratstank.

Besonders vorteilhaft ist es, wenn der Druckspeicher eine Kolben-Zylinder-Einheit umfaßt, deren Kolbenraum mit dem Ablauf des Drosselelements in Verbindung steht und deren Kolben entgegen der im Kolbenraum herrschenden Druckkraft durch eine Feder belastet ist. Das durch das Drosselelement strömende Hydraulikmedium wird in den Kolbenraum der Kolben-Zylinder-Einheit geführt und verdrängt den Kolben entgegen der auf diesen wirkenden Federkraft. Die Geschwindigkeit des Druckaufbaus in der Kolben-Zylinder-Einheit des Druckspeichers entspricht der Geschwindigkeit des Druckaufbaus im Kolbenraum der durch die erfindungsgemäße Anlaufsteuerung gesteuerten Kolben-Zylinder-Einheit bzw. Lamellenkupplung.

In weiterer Ausgestaltung der vorliegenden Erfindung ist vorgesehen, daß der Druckspeicher eine Ablaufleitung aufweist, mittels derer das den Kolben passierende Hydraulikmedium abführbar ist.

Gemäß einer bevorzugten Ausgestaltung der vorliegenden Erfindung ist der durch das Drosselelement beim Durchströmen erzeugbare Druckabfall verstellbar.

Besonders vorteilhaft ist es, wenn das Steuerventil ein Gehäuse und einen darin bewegbar aufgenommenen Kolben aufweist, der in Offenstellung des Steuerventils vorbelastet ist und der mit der ersten Steuerleitung sowie mit der ersten Anschlußleitung in Verbindung steht und durch den das Steuerventil in Abhängigkeit von der Kolbenposition geöffnet oder geschlossen werden kann.

Gemäß einer bevorzugten Ausgestaltung der vorliegenden Erfindung weist das Gehäuse mit der zweiten Anschlußleitung in Verbindung stehende Bohrungen auf. Der Kolben ist vorteilhaft in dem mit der ersten Anschlußleitung in Verbindung stehenden Endbereich als Hohlzylinder ausgeführt, wobei die Wandung des Hohlzylinders Bohrungen aufweist, die in Offenstellung des Steuerventils mit den Bohrungen des Gehäuses in Verbindung stehen und in Schließstellung des Steuerventils von diesen fluiddicht getrennt sind. Befindet sich das Steuerventil in der Offenstellung, strömt aus der zweiten Anschlußleitung durch die Bohrungen des Gehäuses und des Hohlzylinders Hydraulikmedium in den Hohlzylinder des Kolbens und anschließend in die erste Anschlußleitung. Steigt der Druck in der ersten Anschlußleitung über ein vorgegebenes Maß an, wird der Kolben geringfügig in Schließrichtung bewegt, was dazu führt, daß die Bohrungen des Gehäuses und des Kolbens nur noch in einem Teilbereich in Verbindung stehen. Dies hat zur Folge, daß das Hydraulikmedium aufgrund des Drosseleffektes des Übergangs zwischen den beiden Bohrungen nunmehr langsamer in den Hohlzylinder und damit in die erste Anschlußleitung einströmt. Steigt der Druck in der ersten Anschlußleitung weiter an, wird der Kolben des Steuerventils weiter in Schließrichtung bewegt, was schließlich dazu führt, daß die Bohrungen des Kolbens und des Gehäuses nicht mehr miteinander in Verbindung stehen, so daß eine Trennung der ersten und zweiten Anschlußleitung erzielt wird.

Steigt hingegen der Druck in der ersten Steuerleitung an, was bei geschlossenem Steuerventil während des Druckaufbaus der Fall ist, wird der Kolben teilweise in Öffnungsrichtung bewegt, was dazu führt, daß die Bohrungen im Gehäuse und im Kolben wenigstens teilweise und bei vollständiger Öffnung vollständig miteinander in Verbindung stehen. Das Steuerventil ist in diesem Zustand voll geöffnet.

Die Erfindung betrifft ferner eine Lamellenkupplung gemäß dem Oberbegriff des Anspruchs 12, die eine erfindungsgemäße Anlaufsteuerung aufweist, wobei die Zuführung der Lamellenkupplung mit der ersten Anschlußleitung der Anlaufsteuerung in Verbindung steht.

Besonders vorteilhaft ist es, wenn die Rückstellelemente der Lamellenkupplung als Federn ausgeführt sind.

Die vorliegende Erfindung betrifft ferner ein Fahrzeug, insbesondere ein Nutzfahr zeug, bei dem eine erfindungsgemäße Anlaufsteuerung vorgesehen ist, durch die Kolben-Zylinder-Einheit des Fahrzeuges ansteuerbar ist.

In weiterer Ausgestaltung der vorliegenden Erfindung ist vorgesehen, daß die Kolben-Zylinder-Einheit des Fahrzeuges Bestandteil einer Lamellenkupplung ist.

Weitere Einzelheiten und Vorteile der vorliegenden Erfindung werden anhand eines in der Zeichnung dargestellten Ausführungsbeispiels näher erläutert.

Es zeigen:
- Fig. 1: eine schematische Darstellung der erfindungsgemäßen Anlaufsteuerung,
- Fig. 2: eine Schnittdarstellung der erfindungsgemäßen Anlaufsteuerung ohne Hydraulikmedium,
- Fig. 3: die Anlaufsteuerung gemäß Fig. 2 während der Füllung des Kolbenraums der Lamellenkupplung,
- Fig. 4: die Anlaufsteuerung gemäß Fig. 2 nach Beendigung der Füllung des Kolbenraums und bei Beginn des Druckaufbaus,
- Fig. 5: die Anlaufsteuerung gemäß Fig. 2 nach Abschluß des Druckaufbaus,
- Fig. 6: eine perspektivische Darstellung der erfindungsgemäßen Anlaufsteuerung in einer auseinandergezogenen Darstellung und
- Fig. 7: eine Längsschnittdarstellung durch eine Lamellenkupplung.

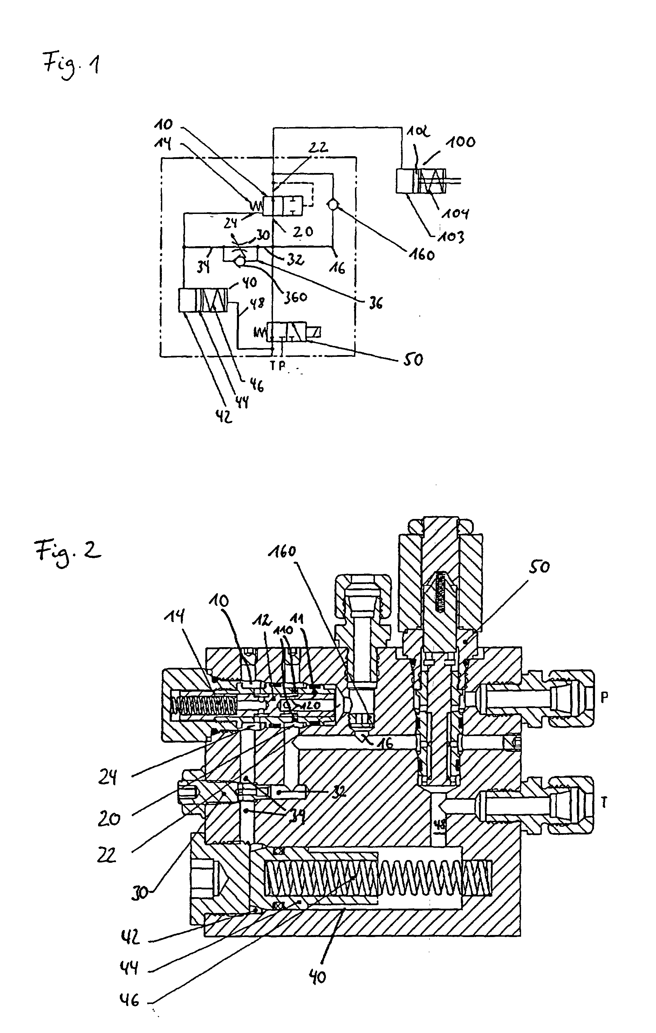

Fig. 1 zeigt in einer schematischen Darstellung den Aufbau der erfindungsgemäßen Anlaufsteuerung. Zwischen der Druckspeisung P und der Kolben-Zylinder-Einheit 100 ist das Steuerventil 10 vorgesehen, das mit der Feder 14 belastet ist. Die Feder 14 bewirkt, daß sich das Steuerventil 10 im nicht mit Hydraulikmedium beaufschlagten Zustand in der Offenstellung befindet.

Das Steuerventil 10 steht mit der mit der Druckspeisung P verbindbaren zweiten Anschlußleitung 20 sowie mit der mit der Kupplung 100 verbindbaren ersten Anschlußleitung 22 in Verbindung. Ferner ist eine erste Steuerleitung 24 vorgesehen, die erfindungsgemäß derart ausgeführt ist, daß auf das Steuerventil 10 bei deren Druckbeaufschlagung eine in Offenstellung wirkende Kraft erzeugbar ist. Die Anschlußleitung 22 bewirkt bei Druckbeaufschlagung eine in Schließstellung des Steuerventils 10 gerichtete Kraft. Die gestrichelte Linie zwischen der ersten Anschlußleitung 22 und dem Steuerventil 10 kennzeichnet die Wirkung des in der Leitung 22 vorliegenden Druckes auf das Steuerventil 10. Die in der ersten Steuerleitung 24 herrschende Druckkraft wie auch die Feder 14 wirken in Offenstellung des Steuerventils 10.

Die erfindungsgemäße Anlaufsteuerung weist ferner das Drosselelement 30 auf, dessen Zulauf 32 mit der Druckspeisung P verbindbar ist und dessen Ablauf 34 mit einem Druckspeicher 40 sowie mit der ersten Steuerleitung 24 in Verbindung steht.

Der Druckspeicher 40 ist als Kolben-Zylinder-Einheit ausgeführt, die den Kolbenraum 42, den Kolben 44 und die Feder 46 aufweist, wobei die Feder 46 entgegen der im Kolbenraum 42 herrschenden Druckkraft auf den Kolben 44 einwirkt. Die Kolben-Zylinder-Einheit ist mit der Ablaufleitung 48 verbunden, mittels derer den Kolben 44 passierendes Hydraulikmedium zurück in den Vorratstank T der Anlaufsteuerung abführbar ist.

Zur Trennung der Anlaufsteuerung von der Druckspeisung P ist das Magnetventil 50 vorgesehen, das bei entsprechender Betätigung der Kupplung geöffnet wird. Anstelle eines Magnetventils 50 ist auch jedes andere Ventil bzw. Steuerorgan einsetzbar.

Sowohl um das Steuerventil 10 als auch um das Drosselelement 30 sind Bypassleitungen 16, 36 vorgesehen, mittels derer beim Ausschalten der Kupplung das Hydraulikmedium sowohl aus der Kolben-Zylinder-Einheit 100 als auch aus dem Druckspeicher 40 zurück in den Vorratstank T abführbar ist. Beide Bypassleitungen 16, 36 weisen Rückschlagventile 160, 360 auf, die nur bei entsprechendem Rücklauf des Mediums durchlässig sind, während sie beim Druckaufbau geschlossen bleiben.

Fig. 1 zeigt ferner in schematischer Darstellung die Kolben-Zylinder-Einheit 100, deren Kolben 102 zum Aufbringen einer Druckkraft beispielsweise auf das Lamellenpaket einer Lamellenkupplung dient. Der Anpreßdruck wird durch das entsprechend durch die Anlaufsteuerung geführte Hydraulikmedium erzeugt, das in den Kolbenraum 103 der Kolben-Zylinder-Einheit 100 einströmt und eine entsprechende Druckkraft auf den Kolben 102 ausübt. Der Kolben 102 ist durch die Feder 104 belastet, die bei Einsatz in einer Lamellenkupplung im nicht betätigten Zustand der Kupplung die Freigabe des Lamellenpaketes und somit den entkuppelten Zustand bewirkt.

Die Funktionsweise der erfindungsgemäßen Anlaufsteuerung wird anhand der Fig. 2 bis 5 verdeutlicht, wobei für identische Bauteile die gleichen Bezugszeichen verwendet werden.

Fig. 2 zeigt in einer Schnittdarstellung die bereits zu Fig. 1 erläuterten Bauteile der Anlaufsteuerung. Im Bereich neben der Druckspeisung P befindet sich das Magnetventil 50. Ferner ist das Steuerventil 10 erkennbar, das den bewegbar im Gehäuse 11 aufgenommenen Kolben 12 sowie die Feder 14 umfaßt. Die Feder 14 übt auf den Kolben 12 eine gemäß Fig. 2 nach rechts gerichtete Kraft aus, wodurch das Steuerventil 10 im nicht mit Hydraulikmedium beaufschlagten Zustand in der Offenstellung gehalten wird. Unterhalb des Kolbens 12 befindet sich die zweite Anschlußleitung 20. Der Kolben 12 steht stirnseitig mit der ersten Anschlußleitung 22 in Verbindung.

Das Gehäuse 11 des Steuerventils 10 weist mit der zweiten Anschlußleitung 20 in Verbindung stehende Bohrungen 110 auf. Der Kolben 12 des Steuerventils 10 ist in seinem rechts dargestellten Endbereich als Hohlzylinder ausgeführt und weist in der Wandung des Hohlzylinders ebenfalls Bohrungen 120 auf, die in der in Fig. 2 dargestellten Offenstellung des Steuerventils mit den Bohrungen 110 des Gehäuses 11 in Verbindung stehen, wodurch auch die Verbindung der ersten Anschlußleitung 22 mit der zweiten Anschlußleitung 20 erzeugt wird.

Das Steuerventil 10 steht ferner mit der ersten Steuerleitung 24 in Verbindung, die derart angeordnet ist, daß bei deren Druckbeaufschlagung eine gemäß Fig. 2 nach rechts wirkende Kraft auf den Kolben 12 ausgeübt wird.

Ist das Steuerventil 10 offen, strömt das Hydraulikmedium durch den Hohlzylinder des Kolbens 12 in die erste Anschlußleitung 22. Das in der ersten Anschlußleitung 22 vorliegende Medium übt auf den Kolben 12 eine nach links und somit in Schließstellung gerichtete Druckkraft aus.

Zwischen der ersten Anschlußleitung 22 und der zweiten Anschlußleitung 20 befindet sich die Bypassleitung 16, in der das Rückschlagventil 160 angeordnet ist.

Im Bereich unterhalb des Steuerventils 10 befindet sich das Drosselelement 30, das mit dem mit der Druckspeisung P verbindbaren Zulauf 32 in Verbindung steht.

Der Ablauf 34 des Drosselelementes 30 steht mit der ersten Steuerleitung 24 sowie mit dem Druckspeicher 40 in Verbindung.

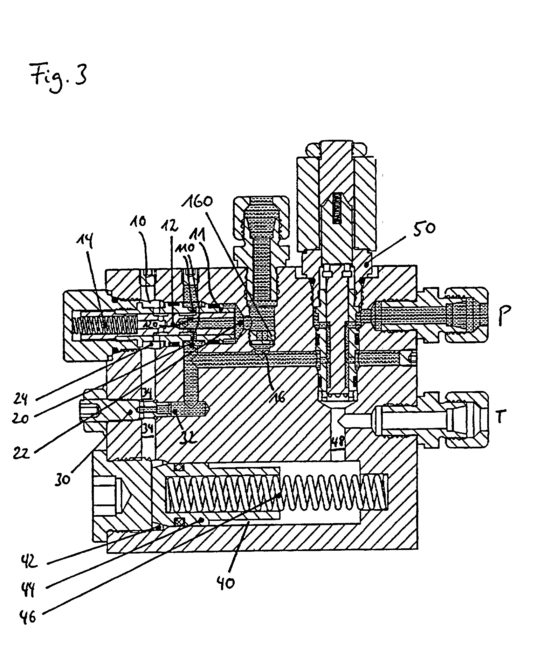

Fig. 3 zeigt die Anlaufsteuerung gemäß Fig. 2 während der Füllung des Kolbenraums 103 der Kolben-Zylinder-Einheit 100 bzw. einer Lamellenkupplung. Das Hydraulikmedium gelangt von der Druckspeisung P durch das geöffnete Magnetventil 50 zunächst durch die zweite Anschlußleitung 20 des Steuerventils 10 sowie durch den Hohlraum des Kolbens 12 in die erste Anschlußleitung 22 und wird hier durch ein entsprechendes Anschlußstück in den Kolbenraum 103 der Kolben- Zylinder-Einheit 100 geführt. Das Hydraulikmedium liegt in diesem Zustand auch im Zulauf 32 des Drosselelementes 30 an, jedoch erfolgt keine oder nur eine geringe Durchströmung des Drosselelementes 30.

Während des in Fig. 3 dargestellten Zustandes wird der Kolbenraum 103 der Kolben-Zylinder-Einheit 100 bzw. einer Lamellenkupplung gefüllt, bis der Kolben 102 an der gewünschten Position bzw. am Lamellenpaket anliegt.

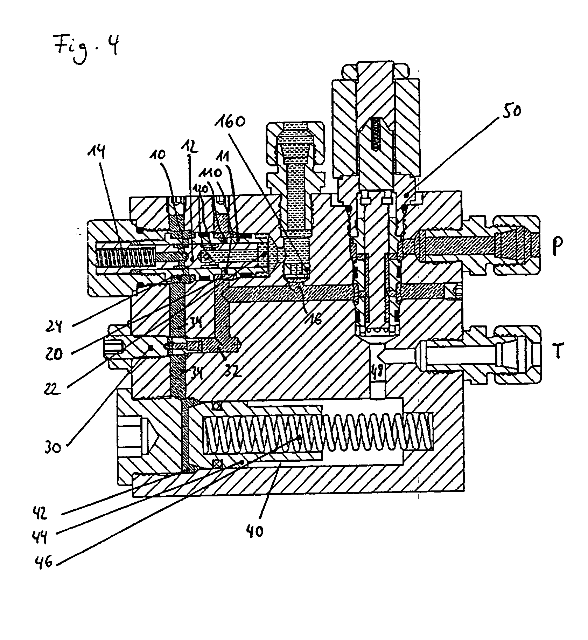

Ist die Füllung des Kolbenraums 103 beendet, was beispielsweise bei einem Druck von 1,5 bar in der ersten Anschlußleitung 22 der Fall ist, beginnt der in Fig. 4 dargestellte Druckaufbau. Befindet sich der Kolben 102 der Kolben-Zylinder-Einheit bzw. der Lamellenkupplung in der gewünschten Position, kommt es zu einem Druckanstieg in der ersten Anschlußleitung 22. Der Druckanstieg bewirkt, daß auf den Kolben 12 des Steuerventils 10 eine nach links gerichtete Kraft ausgeübt wird. Übersteigt diese die Federkraft der Feder 14 wird der Kolben gemäß Fig. 4 nach links bewegt, was dazu führt, daß der Kolben des Steuerventils 10 in die Schließposition bewegt wird.

Diese Bewegung des Kolbens 12 des Steuerventils 10 bewirkt, daß die Bohrungen 110 des Gehäuses 11 nicht mehr mit den Bohrungen 120 des Kolbens 12 in Verbindung stehen, sondern gegenüber diesen derart versetzt sind, daß die erste Anschlußleitung 22 von der zweiten Anschlußleitung 20 fluiddicht getrennt wird.

In der geschlossenen Stellung des Steuerventils 10 strömt das Hydraulikmedium nunmehr durch das Drosselelement 30 zum einen in die erste Steuerleitung 24, zum anderen in den Kolbenraum 42 der Kolben-Zylinder-Einheit des Druckspeichers 40. Wie aus Fig. 4 ersichtlich, wird hierdurch der Kolben 44 entgegen der Federkraft 46 bewegt.

Das Einströmen von Hydraulikmedium in die erste Steuerleitung bewirkt hier einen entsprechenden Druckanstieg, was dazu führt, daß die dadurch erzeugte Druckkraft gemeinsam mit der Kraft der Feder 14 die auf den Kolben 12 wirkende Druckkraft in der ersten Anschlußleitung 22 übersteigt. Ist dies der Fall, öffnet sich das Steuerventil 10 geringfügig. Die Bohrungen 110, 120 des Gehäuses 11 bzw. des Kolbens 12 stehen miteinander in Verbindung. Je nach anliegender Druckdifferenz überlappen die Bohrungen 110, 120 teilweise oder vollständig. Bei teilweiser Überdeckung kommt es nur zu einem entsprechend gedrosselten Einströmen von Hydraulikmedium aus der zweiten Anschlußleitung 20 durch den Hohlraum des Kolbens 12 in die ersten Anschlußleitung 22. Aufgrund des Einströmens von Hydraulikmedium steigt der Druck in der ersten Anschlußleitung 22 sowie im Kolbenraum 103 der Kolben-Zylinder-Einheit 100 bzw. im Kolbenraum der Lamellenkupplung an. Durch den daraus resultierenden Anstieg der in Schließstellung des Steuerventils 10 wirkenden Druckkraft wird dieses erneut geschlossen.

Das Wechselspiel aus geöffneten und geschlossenen Zuständen des Steuerventils 10 führt dazu, daß der Kolbenraum 103 der Kolben-Zylinder-Einheit 100 in einer vorgegebenen Geschwindigkeit mit Druck beaufschlagt wird, wodurch entsprechend der gewünschte zeitliche Verlauf des Anpreßdrucks des Kolbens 102 beispielsweise am Lamellenpaket realisiert wird. In der gleichen Geschwindigkeit steigt der Druck im Kolbenraum 42 der Kolben-Zylinder-Einheit des Druckspeichers 40.

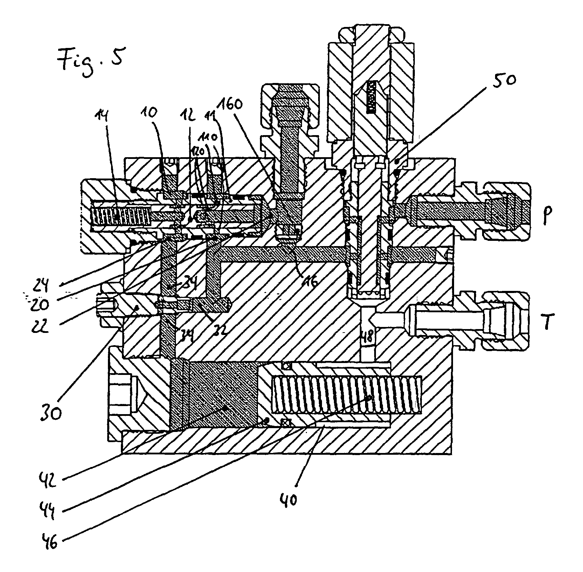

Ist der Druckaufbau beendet, liegt der Kolben 102 mit dem gewünschten Anpreßdruck am Lamellenpaket an. Am Kolben 102 liegt nun der Druck der Druckspeisung P von beispielsweise 18 bar an. Ein weiteres Einströmen von Hydraulikmedium zum Zwecke des Druckaufbaus erfolgt nicht. Verluste von Hydraulikmedium in der Kolben-Zylinder-Einheit 100 bzw. in der Lamellenkupplung können durch ein entsprechend teilweises Öffnen des Steuerventils 10 kompensiert werden. Der durch Verluste erzeugte Druckabfall in der ersten Anschlußleitung 22 bewirkt ein teilweises Öffnen des Steuerventils 10, was dadurch realisiert wird, daß die Öffnungen 110 und 120 wenigstens teilweise miteinander in Verbindung stehen. Dieser sich bei eingeschalteter Kupplung ergebende Zustand ist aus Fig. 5 ersichtlich.

Nach Abschalten der Kupplung gelangt das Hydraulikmedium aus dem Kolbenraum 103 der Kolben-Zylinder-Einheit 100 sowie aus dem Kolbenraum 42 des Druckspeichers 40 zurück in den Vorratstank T und steht hier für ein erneutes Einschalten der Kupplung zur Verfügung.

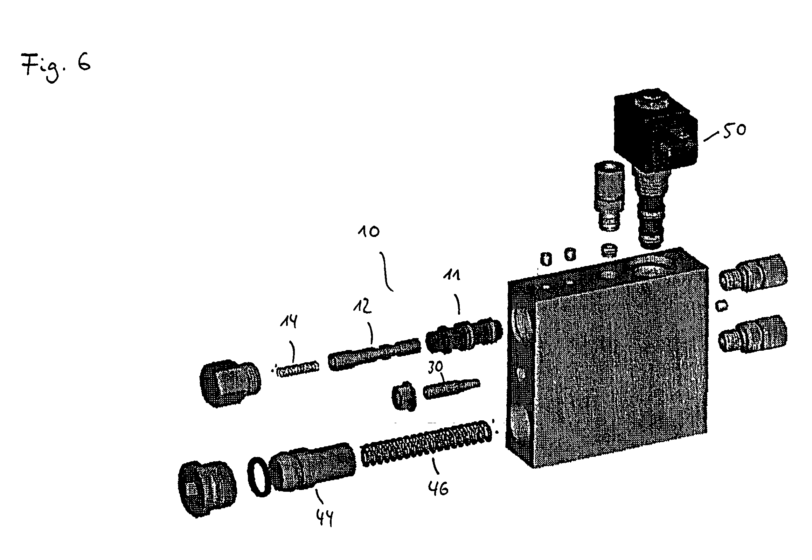

Aus Fig. 6 wird in einer perspektivischen Darstellung die Anordnung der Elemente der erfindungsgemäßen Anlaufsteuerung ersichtlich. Darin sind das Magnetventil 50 sowie das Steuerventil 10 mit Gehäuse 11, Kolben 12 und Feder 14 ersichtlich. Im Bereich unterhalb des Steuerventils 10 befindet sich das Drosselelement 30. Im unteren Bereich der Anlaufsteuerung ist der durch die Feder 46 belastbare Kolben 44 des Druckspeichers 40 erkennbar. Im Bereich neben dem Magnetventil 50 und im Bereich rechts neben dem Gehäuse der Anlaufsteuerung sind Anschlußstücke erkennbar, die zum Verbinden der Anlaufsteuerung mit einer Kolben-Zylinder-Einheit bzw. Lamellenkupplung sowie mit der Druckspeisung und einem das Hydraulikmedium aufnehmenden Tank dienen.

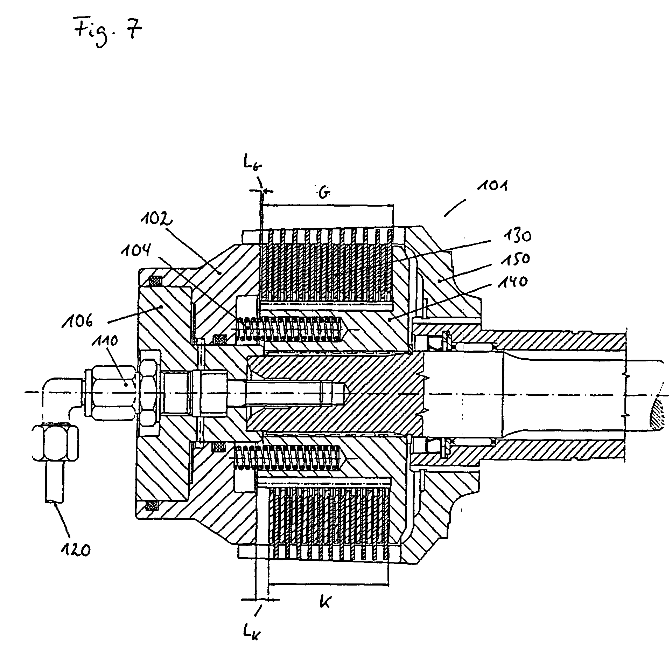

Fig. 7 zeigt in einer Längsschnittdarstellung den Aufbau der Lamellenkupplung 101. Das Lamellenpaket 130 verbindet im Eingriffszustand den Innenmitnehmer 140 mit dem Außenmitnehmer 150 und somit beispielsweise eine Getriebewelle mit einer durch einen Motor angetriebenen Welle. Der Eingriffszustand wird dadurch erreicht, daß der Kolben 102 entgegen der Kraft der Rückstellfedern 104 gemäß Fig. 7 nach rechts bewegt wird und somit das Lamellenpaket 130 reibschlüssig zusammenpreßt.

Der Kolben 102 ist auf dem Kolbenträger 106 angeordnet. Dieser weist ferner die Drehverschraubung 110 auf, an der die Ölzuführung 120 angeordnet ist.

Das Lamellenpaket 130 kann in Abhängigkeit von Fertigungstoleranzen oder durch Verschleiß in seiner Länge zwischen einem Kleinstmaß K und einem Größtmaß G variieren, was dazu führt, daß sich der Lüftweg zwischen den Strecken L_{G} und L_{K} ändert.

Durch die erfindungsgemäße Anlaufsteuerung wird erreicht, daß der zeitliche Verlauf des Anpreßdruckes des Kolbens 102 auf das Lamellenpaket 130 unabhängig von der Größe des Lüftweges konstant bleibt, was unabhängig von Fertigungstoleranzen oder Verschleiß stets ein weiches Einschalten der Kupplung gewährleistet.

## Patentansprüche

1. Anlaufsteuerung zum Ansteuern einer hydraulischen Kolben-Zylinder-Einheit (100), insbesondere zum Ansteuern einer Lamellenkupplung (101), mit
einem Steuerventil (10), das in eine Offenstellung und eine Schließstellung bewegbar ist,
einer mit der hydraulischen Kolben-Zylinder-Einheit (100) verbindbaren ersten Anschlußleitung (22) sowie mit einer mit einer Druckspeisung (P) verbindbaren zweiten Anschlußleitung (20),
wobei die erste (22) und die zweite Anschlußleitung (20) mit dem Steuerventil (10) in Verbindung stehen
und wobei die erste Anschlußleitung (22) derart ausgeführt ist, daß bei deren Druckbeaufschlagung auf das Steuerventil (10) eine in Schließstellung wirkende Kraft erzeugbar ist,
einer ersten Steuerleitung (24), die mit dem Steuerventil (10) derart in Verbindung steht, daß bei deren Druckbeaufschlagung auf das Steuerventil (10) eine in Offenstellung wirkende Kraft erzeugbar ist, sowie mit
einem Drosselelement (30), dessen Zulauf (32) mit der Druckspeisung (P) verbindbar ist und dessen Ablauf (34) mit einem Druckspeicher (40) sowie mit der ersten Steuerleitung (24) in Verbindung steht,
wobei das Steuerventil (10) derart ausgeführt ist, daß es von der Offenstellung in die Schließstellung bewegt wird, wenn die in der ersten Anschlußleitung (22) wirkende Druckkraft die in der ersten Steuerleitung (24) wirkende Druckkraft um einen vorgegebenen Betrag übersteigt.

2. Anlaufsteuerung nach Anspruch 1, **dadurch gekennzeichnet, daß** eine zweite Steuerleitung vorgesehen ist, die mit der ersten Anschlußleitung (22) sowie mit dem Steuerventil (10) in Verbindung steht, und die derart ausgeführt ist, daß bei Druckbeaufschlagung der zweiten Steuerleitung auf das Steuerventil (10) eine in Schließstellung wirkende Kraft erzeugbar ist.

3. Anlaufsteuerung nach Anspruch 1 oder 2, **dadurch gekennzeichnet, daß** eine Feder (14) vorgesehen ist, durch die das Steuerventil (10) in Offenstellung vorbelastet ist.

4. Anlaufsteuerung nach einem oder mehreren der Ansprüche 1 bis 3, **dadurch gekennzeichnet, daß** eine elektrische Meß- und Steuereinheit vorgesehen ist, durch die die Drücke
in der ersten Steuerleitung (24) sowie
in der ersten Anschlußleitung (22) und/oder in der zweiten Steuerleitung
erfaßbar und auswertbar sind und durch die in Abhängigkeit der Auswertung eine in Offen- oder Schließstellung des Steuerventils (10) wirkende Kraft ausübbar ist.

5. Anlaufsteuerung nach einem oder mehreren der Ansprüche 1 bis 4, **dadurch gekennzeichnet, daß** ein Magnetventil (50) vorgesehen ist, durch das die Anlaufsteuerung von der Druckspeisung (P) absperrbar ist.

6. Anlaufsteuerung nach einem oder mehreren der Ansprüche 1 bis 5, **dadurch gekennzeichnet, daß** das Drosselelement (30) und/oder das Steuerventil (10) eine Bypassleitung (36, 16) aufweisen, in der ein Rückschlagventil (160, 360) vorgesehen ist, mittels dessen Hydraulikmedium aus dem Druckspeicher (40) und/oder aus der Kolben-Zylinder-Einheit (100) abführbar ist.

7. Anlaufsteuerung nach einem oder mehreren der Ansprüche 1 bis 6, **dadurch gekennzeichnet, daß** der Druckspeicher (40) eine Kolben-Zylinder-Einheit umfaßt, deren Kolbenraum (42) mit dem Ablauf (34) des Drosselelementes (30) in Verbindung steht und deren Kolben (44) entgegen der im Kolbenraum (42) herrschenden Druckkraft durch eine Feder (46) belastet ist.

8. Anlaufsteuerung nach Anspruch 7, **dadurch gekennzeichnet, daß** die Kolben-Zylinder-Einheit des Druckspeichers (40) eine Ablaufleitung (48) aufweist, mittels derer das den Kolben (42) passierende Hydraulikmedium abführbar ist.

9. Anlaufsteuerung nach einem oder mehreren der Ansprüche 1 bis 8, **dadurch gekennzeichnet, daß** der beim Durchströmen des Drosselelementes (30) erzeugbare Druckabfall verstellbär ist.

10. Anlaufsteuerung nach einem oder mehreren der Ansprüche 1 bis 9, **dadurch gekennzeichnet, daß** das Steuerventil (10) ein Gehäuse (11) und einen darin bewegbar aufgenommenen Kolben (12) aufweist, der in Offenstellung des Steuerventils (10) vorbelastet ist und der mit der ersten Steuerleitung (24) sowie mit der ersten Anschlußleitung (22) in Verbindung steht und durch den das Steuerventil (10) in Abhängigkeit von der Kolbenposition geöffnet oder geschlossen werden kann.

11. Anlaufsteuerung nach Anspruch 10, **dadurch gekennzeichnet, daß** das Gehäuse (11) mit der zweiten Anschlußleitung (20) in Verbindung stehende Bohrungen (110) aufweist, daß der Kolben (12) in dem mit der ersten Anschlußleitung (22) in Verbindung stehenden Endbereich als Hohlzylinder ausgeführt ist, wobei die Wandung des Hohlzylinders Bohrungen (120) aufweist, die in Offenstellung des Steuerventils (10) mit den Bohrungen (110) des Gehäuses (11) in Verbindung stehen und in Schließstellung des Steuerventils (10) von diesen fluiddicht getrennt sind.

12. Lamellenkupplung (101) mit einem durch einen Kolben (102) zusammenpreßbaren Lamellenpaket (130), mit einer Zuführung (120) für ein Hydraulikmedium, die derart angeordnet ist, daß auf den Kolben (102) bei Druckbeaufschlagung der Zuführung (120) eine auf das Lamellenpaket (130) gerichtete Kraft erzeugbar ist, sowie mit einem oder mehreren Rückstellelementen, die auf den Kolben eine entgegen der durch das Hydraulikmedium aufbringbaren Kraft wirkende Gegenkraft aufbringen,
**dadurch gekennzeichnet,**
**daß** die Lamellenkupplung (101) eine Anlaufsteuerung nach einem oder mehreren der Ansprüche 1 bis 11 aufweist, wobei die Zuführung (120) der Lamellenkupplung (101) mit der ersten Anschlußleitung (22) der Anlaufsteuerung in Verbindung steht.

13. Lamellenkupplung (101) nach Anspruch 12, **dadurch gekennzeichnet, daß** die Rückstellelemente als Federn (104) ausgeführt sind.

14. Fahrzeug, insbesondere Nutzfahrzeug, mit einer mit einem Hydraulikmedium beaufschlagbaren Kolben-Zylinder-Einheit (100),
**dadurch gekennzeichnet,**
**daß** eine Anlaufsteuerung nach einem oder mehreren der Ansprüche 1 bis 11 vorgesehen ist, durch die die Kolben-Zylinder-Einheit (100) ansteuerbar ist.

15. Fahrzeug nach Anspruch 14, **dadurch gekennzeichnet, daß** die Kolben-Zylinder-Einheit (100) Bestandteil einer Lamellenkupplung (101) ist.

## Claims

1. A start-up control for the control of a hydraulic piston-in-cylinder unit (100), in particular for the control of a multiple-disk clutch (101), comprising
- a control valve (10) movable into an open position and into a closed position;
- a first connection line (22) connectable to the hydraulic piston-in-cylinder unit (100) and comprising a second connection line (20) connectable to a pressure feed (P),
wherein the first (22) and the second connection line (20) are in communication with the control valve (10), and
wherein the first connection line (22) is designed such that, when it is pressure-loaded, a force acting in the closed position can be generated on the control valve (10)
- a first control line (24) which is in communication with the control valve (10) such that, when said control line (24) is pressure-loaded, a force acting in the open position can be generated on the control valve (10), and comprising
- a restrictor element (30) whose inlet (32) can be connected to the pressure feed (P) and whose outlet (34) is in communication with a pressure store (40) and with the first control line (24),
wherein the control valve (10) is designed such that it is moved from the open position into the closed position when the pressure force acting in the first connection line (22) exceeds the pressure force acting in the first control line (24) by a pre-determined magnitude.

2. A start-up control in accordance with claim 1, wherein a second control line is provided which is in communication with the first connection line (22) and with the control valve (10) and which is designed such that a force acting in the closed position can be generated on the control valve (10) on a pressure loading of the second control line.

3. A start-up control in accordance with either of claims 1 or 2, wherein a spring (14) is provided by which the control valve (10) is biased into the open position.

4. A start-up control in accordance with one or more of claims 1 to 3, wherein an electrical measuring and control unit is provided by which the pressures
in the first control line (24) and
in the second control line (22) and/or in the second control line
can be detected and evaluated and by which the force acting in the open or closed position of the control valve (10) in dependence on the evaluation can be exerted.

5. A start-up control in accordance with one or more of claims 1 to 4, wherein a solenoid valve (50) is provided by which the start-up control can be blocked from the pressure feed (P).

6. A start-up control in accordance with one or more of claims 1 to 5, wherein the restrictor element (30) and/or the control valve (10) have a bypass-line (36, 16) in which a check valve (160, 360) is provided by means of which hydraulic medium can be led out of the pressure store (40) and/or out of the piston-in-cylinder unit (100).

7. A start-up control in accordance with one or more of claims 1 to 6, wherein the pressure store (40) includes a piston-in-cylinder unit whose piston space (42) is in communication with the outlet (34) of the restrictor element (30) and whose piston (44) is loaded by a spring (46) against the pressure force prevailing in the piston space (42).

8. A start-up control in accordance with claim 7, wherein the piston-in-cylinder unit of the pressure store (40) has an outlet line (48) by means of which the hydraulic medium passing the piston (42) can be outlet.

9. A start-up control in accordance with one or more of claims 1 to 8, wherein the pressure drop which can be produced when the restrictor element (30) is flowed through can be adjusted.

10. A start-up control in accordance with one or more of claims 1 to 9, wherein the control valve (10) has a housing (11) and a piston (12) movably received therein which is biased in the open position of the control valve (10) and which is in communication with the first control line (24) and with the first connection line (22) and by which the control valve (10) can be opened or closed in dependence on the piston position.

11. A start-up control in accordance with claim 10, wherein the housing (11) has bores (110) in communication with the second connection line (20); the piston (12) is designed as a hollow cylinder in the end region in communication with the first connection line (22), with the wall of the hollow cylinder having bores (120) which are in communication with the bores (110) of the housing (11) in the open position of the control valve (10) and which are separated from them in a fluid-tight manner in the closed position of the control valve (10).

12. A multiple-disk clutch (101) having a lamellar package (130) which can be compressed by a piston (102), having a feed (120) for a hydraulic medium arranged such that a force directed to the lamellar package (130) can be produced on the piston (102) on a pressure loading of the feed (120) and having one or more return elements which apply a counter-force acting onto the piston against the force applicable by the hydraulic medium,
**characterised in that**
the multiple-disk clutch (101) has a start-up control in accordance with one or more of claims 1 to 11, with the feed (120) of the multiple-disk clutch (101) being in communication with the first connection line (22) of the start-up control.

13. A multiple-disk clutch (101) in accordance with claim 12, wherein the return elements are made as springs (104).

14. A vehicle, in particular a commercial vehicle, having a piston-in-cylinder unit (100) which can be loaded by a hydraulic medium,
**characterised in that**
a start-up control in accordance with one or more of claims 1 to 11 is provided by which the piston-in-cylinder unit (100) can be controlled.

15. A vehicle in accordance with claim 14, wherein a piston-in-cylinder unit (100) is a component of a multiple-disk clutch (101).

## Revendications

1. Commande de démarrage pour la commande d'une unité de piston-cylindre (100), en particulier pour la commande d'un accouplement à lamelles (101), avec
une soupape de commande (10) qui est mobile dans une position d'ouverture et dans une position de fermeture,
une première ligne de raccordement (22) couplable avec l'unité de piston-cylindre (100) hydraulique ainsi qu'avec une seconde ligne de raccordement (20) couplable avec une alimentation de pression (P),
la première (22) et la seconde ligne de raccordement (20) étant en contact avec la soupape de commande (10)
et la première ligne de raccordement (22) étant réalisée de telle manière que lors de sa pressurisation, une force agissant en position de fermeture est générable sur la soupape de commande (10),
une première ligne de commande (24) qui est en contact avec la soupape de commande (10) de telle manière que lors de sa pressurisation, une force agissant en position d'ouverture est générable sur la soupape de commande (10), ainsi qu'avec
un élément d'étranglement (30), dont l'arrivée (32) est couplable avec l'alimentation de pression (P) et dont l'écoulement (34) est en contact avec un accumulateur de pression (40), ainsi qu'avec la première ligne de commande (24),
la soupape de commande (10) est réalisée de telle manière qu'elle est bougée de la position d'ouverture dans la position de fermeture lorsque la force de pression agissant dans la première ligne de raccordement (22) dépasse la force de pression agissant dans la première ligne de commande (24) d'une valeur prédéfinie.

2. Commande de démarrage selon la revendication 1, **caractérisée en ce qu'**une seconde ligne de commande est prévue qui est en contact avec la première ligne de raccordement (22) ainsi qu'avec la soupape de commande (10), et qui est réalisée de telle manière qu'en cas de pressurisation de la seconde ligne de commande, une force agissant en position de fermeture est générable sur la soupape de commande (10).

3. Commande de démarrage selon la revendication 1 ou 2, **caractérisée en ce qu'**un ressort (14) est prévu via lequel la soupape de commande (10) est précontrainte en position d'ouverture.

4. Commande de démarrage selon l'une ou plusieurs des revendications 1 à 3, **caractérisée en ce qu'**une unité électrique de mesure et de commande est prévue via laquelle les pressions sont enregistrables et évaluables dans la première ligne de commande (24) ainsi que dans la première ligne de raccordement (22) et/ou dans la seconde ligne de commande et via laquelle une force agissant en position d'ouverture et de fermeture de la soupape de commande (10) est exerçable en fonction de l'évaluation.

5. Commande de démarrage selon l'une ou plusieurs des revendications 1 à 4, **caractérisée en ce qu'**une électrovanne (50) est prévue via laquelle la commande de démarrage est obturable de l'alimentation de pression (P).

6. Commande de démarrage selon l'une ou plusieurs des revendications 1 à 5, **caractérisée en ce que** l'élément d'étranglement (30) et/ou la soupape de commande (10) présentent une conduite de dérivation (36, 16) dans laquelle un clapet anti-retour (160, 360) est prévu au moyen duquel du fluide hydraulique est évacuable de l'accumulateur de pression (40) et/ou de l'unité de piston-cylindre (100).

7. Commande de démarrage selon l'une ou plusieurs des revendications 1 à 6, **caractérisée en ce que** l'accumulateur de pression (40) comprend une unité de piston-cylindre dont la chambre de piston (42) est en contact avec l'écoulement (34) de l'élément d'étranglement (30) et dont le piston (44) est contraint par un ressort (46) à l'encontre de la force de pression régnant dans la chambre de piston (42).

8. Commande de démarrage selon la revendication 7, **caractérisée en ce que** l'unité de piston-cylindre de l'accumulateur de pression (40) présente une conduite d'écoulement (48) au moyen de laquelle le fluide hydraulique passant par le piston (42) est évacuable.

9. Commande de démarrage selon l'une ou plusieurs des revendications 1 à 8, **caractérisée en ce que** la chute de pression générable en cas de traverse de l'élément d'étranglement (30) est réglable.

10. Commande de démarrage selon l'une ou plusieurs des revendications 1 à 9, **caractérisée en ce que** la soupape de commande (10) présente une cage (11) et un piston (12) logé de manière mobile à l'intérieur qui est précontraint en position d'ouverture de la soupape de commande (10) et qui est en contact avec la première ligne de commande (24) ainsi qu'avec la première ligne de raccordement (22) et via lequel la soupape de commande (10) peut être ouverte ou fermée en fonction de la position du piston.

11. Commande de démarrage selon la revendication 10, **caractérisée en ce que** la cage (11) présente des alésages (110) étant en contact avec la seconde ligne de raccordement (20) et **en ce que** le piston (12) est réalisé sous forme de cylindre creux dans sa zone terminale étant en contact avec la première ligne de raccordement (22), la paroi dudit cylindre creux présentant des alésages (120) qui sont en contact avec les alésages (110) de la cage (11) en position d'ouverture de la soupape de commande (10) et sont séparés de cette dernière de manière imperméable au fluide en position de fermeture de la soupape de commande (10).

12. Accouplement à lamelles (101) avec un paquet de lamelles (130) compactable par un piston (102), avec une alimentation (120) pour un fluide hydraulique qui est disposée de telle manière qu'une force dirigée sur le paquet de lamelles (130) est générable sur le piston (102) en cas de pressurisation de l'alimentation (120), ainsi qu'avec un ou plusieurs éléments de rappel qui appliquent sur le piston une force de réaction agissant à l'encontre de la force applicable par le fluide hydraulique, **caractérisé en ce que** l'accouplement à lamelles (101) présente une commande de démarrage selon l'une ou plusieurs des revendications 1 à 11, l'arrivée (120) de l'accouplement à lamelles (101) étant en contact avec la première ligne de raccordement (22) de la commande de démarrage.

13. Accouplement à lamelles (101) selon la revendication 12, **caractérisé en ce que** les éléments de rappel sont réalisés sous forme de ressorts (104).

14. véhicule, en particulier véhicule utilitaire, avec une unité de piston-cylindre (100) alimentable avec un fluide hydraulique, **caractérisé en ce qu'**une commande de démarrage selon l'une ou plusieurs des revendications 1 à 11 est prévue via laquelle l'unité de piston-cylindre (100) est activable.

15. véhicule selon la revendication 14, **caractérisé en ce que** l'unité de piston-cylindre (100) fait partie d'un accouplement à lamelles (101).
